# DEMANDE DE BREVET EUROPEEN

(11) **EP 0 668 154 A1**
(43) Date de publication de la demande: **23.08.1995**
(21) Numéro de dépôt: 95400347.1
(22) Date de dépôt: 20.02.1995
(51) Int. Cl.: B32B 5/26

(54) **Matériau en nappe en matière plastique à stucture réticulaire**

(30) Priorité: 21.02.1994 FR 9401928
(71) Demandeur: Nortene Technologies, F-59000 Lille (FR)
(72) Inventeur: Genty, Alain, F-59420 Mouvaux (FR)
(74) Mandataire: Leszczynski, André

(57) **Abrégé**

L'invention est relative à un matériau en nappe en matière plastique à structure réticulaire.

Il comporte une couche de base en matière plastique, notamment en polyoléfine, à structure réticulaire, et une couche externe à structure réticulaire en matière plastique présentant des propriétés antiglissantes, les deux couches étant obtenues séparément par extrusion et solidarisées par collage ou thermofusion, notamment par ramollissement superficiel par flammage de la couche de base.

## Description

La présente invention est relative à un matériau en nappe en matière plastique à structure réticulaire, comportant au moins une face antiglissante, et destiné en particulier à la réalisation d'intercalaires pour le conditionnement et le transport de différents produits.

On connaît des matériaux, à structure de grillage, en matière plastique , notamment en polyoléfine, qui présentent pour l'application envisagée, une épaisseur relativement importante pour avoir des propriétés mécaniques satisfaisantes, notamment sur le plan de la rigidité. On connaît ainsi de tels matériaux à structure réticulaire biplanaire formée de deux ensembles de brins croisés, de section relativement importante.

L'inconvénient de ces matériaux connus est que la surface au contact des pièces conditionnées est relativement glissante de telle sorte que les pièces peuvent se déplacer par rapport à la plaque et le cas échéant être endommagées.

On connaît par ailleurs par FR-A-2 683 790 des plaques composites à structure pleine ou alvéolaire en matière plastique, réalisées par coextrusion, et comportant une couche de base en polyoléfine et une couche externe présentant des propriétés antiglissantes.

Les techniques connues de coextrusion permettent de réaliser de façon satisfaisante de telles plaques dans lesquelles les deux couches constitutives sont à structure pleine ou alvéolaire, mais ne permettent pas d'obtenir de manière satisfaisante des matériaux en nappe dont l'une au moins des couches doit présenter une structure réticulaire épaisse, en particulier biplanaire.

Or, les matériaux à structure réticulaire sont avantageux dans l'application particulière envisagée afin d'obtenir des vides laissant passer les gaz et les liquides, pour l'aération ou le lavage des produits conditionnés, et pour, en cas d'incendie sur le lieu de stockage, permettre un passage d'eau ou de compositions extinctrices vers les produits conditionnés, ce qui n'est pas possible avec des plaques pleines ou à structure alvéloaire.

La présente invention se propose de réaliser un matériau en nappe en matière plastique sans mettre en oeuvre de technique de coextrusion, le matériau obtenu présentant les mêmes propriétés mécaniques, notamment de rigidité, que les matériaux à structure réticulaire connus, mentionnés en préambule, et présentant en outre sur l'une au moins de ses faces, des propriétés antiglissantes.

La présente invention a pour objet un matériau en nappe en matière plastique à structure réticulaire caractérisé par le fait qu'il comporte une couche de base en matière plastique, notamment en polyoléfine, à structure réticulaire et une couche externe à structure réticulaire en matière plastique présentant des propriétés antiglissantes, les deux couches étant obtenues séparément par extrusion et solidarisées par collage ou thermofusion, notamment par ramollissement superficiel par flammage de la couche de base.

La couche externe présente une épaisseur faible par rapport à la couche de base, le rapport des épaisseurs de la couche de base et de la couche externe étant avantageusement compris entre 2 et 30.

La couche externe est avantageusement une couche monoplanaire à mailles carrées ou losanges présentant en particulier une épaisseur comprise entre 0,2 mm et 2 mm.

Le rapport des sections des mailles de la couche de base et des mailles de la couche externe est avantageusement compris entre 4 et 100.

Dans une variante de mise en oeuvre de l'invention, le matériau en nappe comporte deux couches externes, identiques ou non, solidarisées de part et d'autre de la couche de base.

La couche de base est de préférence obtenue par extrusion de matière plastique, notamment de polyéthylène basse densité, par le procédé connu sous le nom de NETLON. Ce procédé consiste à produire une structure réticulaire par découpe d'une gaine tubulaire obtenue à l'aide d'un dispositif d'extrusion continue comprenant deux éléments de filière concentriques tournant en sens contraires.

L'un des éléments de filière comprend une pluralité de crans périphériques dont la section correspond à la section voulue pour les brins d'un des ensembles de brins de la structure, l'autre 'élément de filière présentant une pluralité de crans dont la section correspond à la section voulue pour les brins de l'autre ensemble de brins de la structure, les crans des différents éléments de filière communiquant avec des canaux d'amenée de la matière plastique ramollie en provenance d'une extrudeuse.

Les brins de l'un des ensembles de brins constituent des filaments hélicoïdaux auxquels adhèrent les brins de l'autre ensemble de brins, sous forme de filaments hélicoïdaux, de façon à former une structure réticulaire.

La couche de base du matériau selon l'invention peut cependant être réalisée par tout autre procédé connu d'extrusion continue permettant d'obtenir une structure réticulaire, et peut être réalisée en tout autre matériau approprié par exemple en polyéthylène moyenne ou haute densité, ou en polypropylène.

La ou les couches externes peuvent être réalisées par extrusion continue, par le procédé NETLON mentionné ci-dessus, ou par tout autre procédé connu permettant d'obtenir une structure réticulaire, sensiblement monoplanaire, par extrusion continue d'une matière thermoplastique constituée en totalité ou en partie d'un produit thermoplastique présentant des propriétés antiglissantes.

A titre de produit thermoplastique présentant des propriétés antiglissantes utilisables pour réaliser la ou les couches externes du matériau selon la présente invention, on peut citer l'EVA (éthylène-acétate de vinyle), les élastomères thermoplastiques et les polyoléfines à bas module de flexion et à dureté Shore D de l'ordre de 30.

Ces produits thermoplastiques peuvent être utilisés seuls ou en mélange, dans des proportions comprises entre 10% et 100% en poids, avec des matières thermoplastiques telles que le polyéthylène.

La solidarisation de la couche de base et de la couche externe à propriétés antiglissantes s'effectue de préférence par flammage, en faisant passer en continu la structure réticulaire destinée à former la couche de base devant une rampe de brûleurs pour chauffer une face de la structure, et en appliquant en continu entre deux rouleaux la structure réticulaire destinée à former la couche externe sur la structure réticulaire formant la couche de base.

Le procédé peut être mis en oeuvre industriellement en conditionnant au préalable les structures destinées à former les couches du matériau selon l'invention en rouleaux et en déroulant en continu les différentes couches à partir de leurs rouleaux respectifs, le matériau formé par solidarisation des couches étant lui-même conditionné en rouleau.

La solidarisation des couches du matériau selon l'invention peut en variante s'effectuer par collage, avec ou sans application de pression, notamment en utilisant des adhésifs de type Hot-Melt.

A titre d'exemple, on a réalisé un matériau, à usage d'intercalaire, en solidarisant par flammage une couche de base constituée par le produit commercialisé par la société déposante sous la référence 5920 et constitué par une grille en polyéthylène, biplanaire, présentant une épaisseur de 4 mm, et des mailles de 5 mm de côté, et une couche externe réalisée en EVA, monoplanaire, présentant une épaisseur de 1,1 mm et des mailles de 2 mm de côté.

## Revendications

1. Matériau en nappe en matière plastique à structure réticulaire, caractérisé par le fait qu'il comporte une couche de base en matière plastique, notamment en polyoléfine, à structure réticulaire, et une couche externe à structure réticulaire en matière plastique présentant des propriétés antiglissantes, les deux couches étant obtenues séparément par extrusion et solidarisées par collage ou thermofusion, notamment par ramollissement superficiel par flammage de la couche de base.

2. Matériau selon la revendication 1, caractérisé par le fait que la couche externe présente une épaisseur faible par rapport à la couche de base.

3. Matériau selon la revendication 2, caractérisé par le fait que le rapport des épaisseurs de la couche de base et de la couche externe est compris entre 2 et 30.

4. Matériau selon l'une quelconque des revendications 1 à 3, caractérisé par le fait que la couche externe présente une épaisseur comprise entre 0,2 mm et 2 mm.

5. Matériau selon l'une quelconque des revendications précédentes, caractérisé par le fait que la couche externe est monoplanaire.

6. Matériau selon l'une quelconque des revendications précédentes, caractérisé par le fait que la couche de base est biplanaire.

7. Matériau selon l'une quelconque des revendications précédentes, caractérisé par le fait que le rapport des sections des mailles de la couche de base et des mailles de la couche externe est compris entre 4 et 100.

8. Matériau selon l'une quelconque des revendications précédentes, caractérisé par le fait qu'il comporte deux couches externes solidarisées de part et d'autre de la couche de base.
